Europäisches Patentamt

European Patent Office

Office européen des brevets

(19)

(11) Veröffentlichungsnummer: **0 062 159**
**B1**

(12) **EUROPÄISCHE PATENTSCHRIFT**

(45) Veröffentlichungstag der Patentschrift: **27.05.87**

(51) Int. Cl.⁴: **G 05 B 19/41**

(21) Anmeldenummer: **82101614.4**

(22) Anmeldetag: **03.03.82**

(54) **Numerische Bahnsteuerung für eine Werkzeugmaschine.**

(30) Priorität: **07.04.81 DE 3113970**

(43) Veröffentlichungstag der Anmeldung:
**13.10.82 Patentblatt 82/41**

(45) Bekanntmachung des Hinweises auf die
Patenterteilung:
**27.05.87 Patentblatt 87/22**

(84) Benannte Vertragsstaaten:
**AT CH FR GB IT LI NL SE**

(56) Entgegenhaltungen:
**DE-A-2 945 660**
**GB-A-1 211 418**
**GB-A-1 439 373**
**GB-A-1 506 224**

(73) Patentinhaber: **Dr. Johannes Heidenhain GmbH**
**Nansenstrasse 17**
**D-8225 Traunreut (DE)**

(72) Erfinder: **Burkhardt, Horst, Dr.**
**Fraueneichweg 12**
**D-8221 Truchtlaching (DE)**
Erfinder: **Huber, Josef, Ing. (grad.)**
**D-8261 Engelsberg**
**D-8261 Engelsberg (DE)**
Erfinder: **Vollmayr, Norbert, Dipl.-Ing.**
**Bruckauerweg 2**
**D-8221 Traunwalchen (DE)**

Courier Press, Leamington Spa, England.

EP 0 062 159 B1

**Beschreibung**

Die Erfindung betrifft eine numerische Bahnsteuerung für eine Werkzeugmaschine gemäß dem Oberbegriff des Anspruches.

In der DE—A—29 45 660 ist eine numerische Bahnsteuerung beschrieben, bei der ein erster Rechner aufgrund der eingegebenen Bahninformation das jeweils zwischen zwei Bahnstützpunkten liegende gekrümmte Stück der Bewegungsbahn eines verfahrbaren Elements in einzelne Abschnitte unterteilt und für jeden jeweils einen dieser Abschnitte annähernden Parabelbogen die Parameterdarstellung ermittelt. Dem ersten Rechner ist für jede Bewegungsachse ein zweiter Rechner nachgeschaltet, der aufgrund der vom ersten Rechner erhaltenen Daten zumindest die Annäherung der Parabelbogen durch einen Polygonzug mittels Linearinterpolation durchführt und Lagesollwerte erzeugt.

Aus der DE—OS 30 05 738 ist eine numerische Steuereinrichtung für eine Werkzeugmaschine mit einer Werkzeugradius-Kompensationseinrichtung bekannt, bei der aus den Sollkonturen kompensierte Konturen im Abstand des Radius des Werkzeugs ermittelt werden. Um an den Schnittpunkten der Sollkonturen zu tief ausgeschnittene Bereiche im Werkstück zu vermeiden, wird der Schnittpunkt der kompensierten Konturen bestimmt, an dem der Mittelpunkt des Werkzeugs seine Richtung ändert; bei dieser Richtungsänderung muß aber das Werkzeug kurzzeitig angehalten werden.

Der GB—A—1 439 373 entnimmt man eine numerische Bahnsteuerung, bei der zur Abrundung zweier sich schneidender Bahnen für ein Werkzeug aus einem eingegebenen Rundungskreisradius ein Rundungskreis mittels eines Rechners ermittelt wird, der tangential in die beiden Bahnen übergeht.

Aus der GB—A—1 506 224 ist ebenfalls eine numerische Bahnsteuerung bekannt, bei der zur Abrundung zweier sich schneidender Bahnen für ein Werkzeug von einem Rechner aus den Anfangskoordinaten der ersten Bahn, den Endkoordinaten der zweiten Bahn, den Schnittpunktskoordinaten sowie einem Rundungskreisradius ein Rundungskreis berechnet wird, der tangential in die beiden Bahnen übergeht.

Der Erfindung liegt die Aufgabe zugrunde, eine numerische Bahnsteuerung anzugeben, bei der das Werkzeug beim Einfahren in eine Kontur bzw. beim Ausfahren aus einer Kontur mit konstanter Bahngeschwindigkeit geführt werden kann.

Diese Aufgabe wird erfindungsgemäß durch die kennzeichnenden Merkmale des Anspruches gelöst.

Die mit der Erfindung erzielten Vorteile bestehen insbesondere darin, daß die Führung des Werkzeugs mit konstanter Bahngeschwindigkeit eine wesentliche Verkürzung der Bearbeitungszeit zur Folge hat und daß die Eingabe lediglich des Rundungsradius für einen Rundungskreis den Bedienungskomfort erhöht. Ohne großen Programmieraufwand wird ein tangentiales Einfahren in eine Kontur bzw. ein Aufahren aus einer Kontur ermöglicht.

Vorteilhafte Weiterbildungen der Erfindung entnimmt man den Unteransprüchen.

Ein Ausführungsbeispiel der Erfindung ist in der Zeichnung dargestellt und wird im folgenden näher erläutert.

Es zeigen

Figur 1 eine schematische Darstellung einer dreiachsigen Fräsmaschine,

Figur 2 ein Bockschaltbild einer numerischen Bahnsteuerung mit zwei Lageregelkreisen mit Merkmalen der Erfindung und

Figur 3 eine Werkstückkontur mit Rundungskreisen nach der Erfindung.

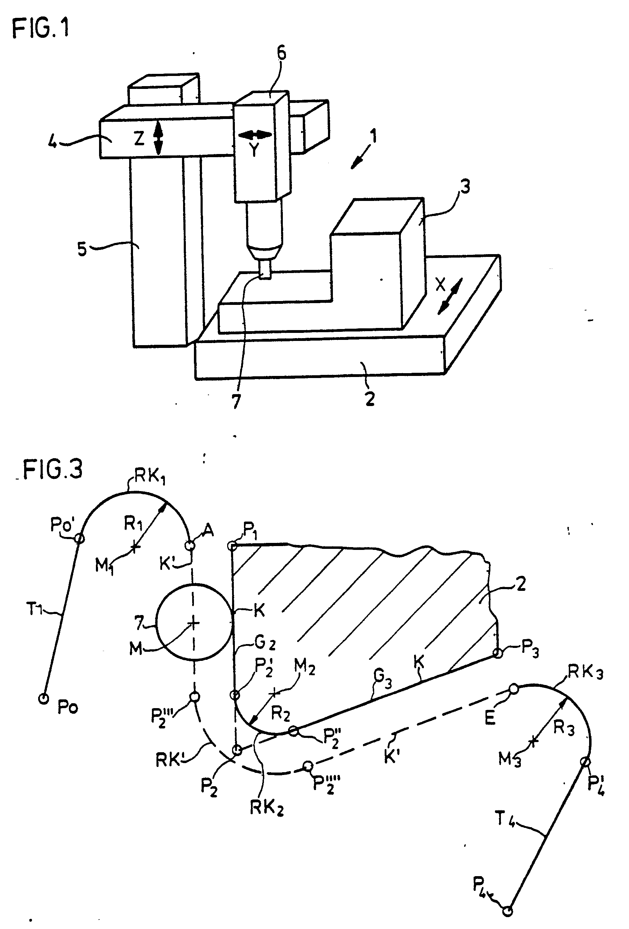

In Figur 1 ist eine dreiachsige Fräsmaschine 1 schematisch dargestellt, bei der ein Schlitten 2 zur Aufnahme eines zu bearbeitenden Werkstücks 3 auf einem nicht gezeigten Bett horizontal in X-Richtung, ein Ausleger 4 an einem Ständer 5 vertikal in Z-Richtung und ein Spindelkopf 6 zur Aufnahme eines Fräswerkzeugs 7 am Ausleger 4 horizontal in Y-Richtung verfahrbar sind. Im folgenden sollen nur Bewegungen des Werkstücks 3 in X-Richtung und des Werkzeugs 7 in Y-Richtung betrachtet werden.

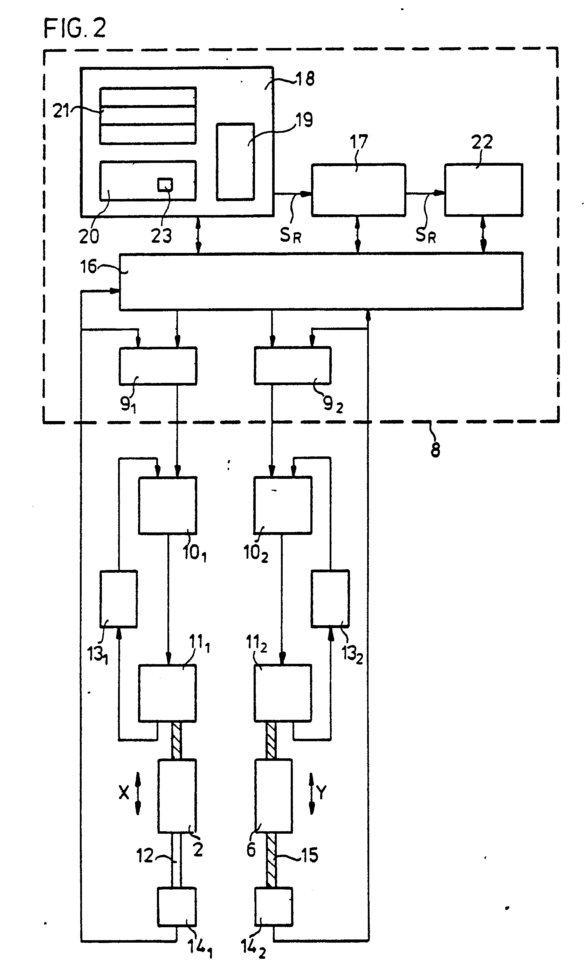

Zur Positionierung des Werkstücks 3 in X-Richtung ist ein erster geschlossener Lageregelkreis gemäß Figur 2 vorgesehen, bei dem ein Sollwert/Istwert-Vergleicher $9_1$ einer numerischen Bahnsteuerung 8 mit seinem Analogausgang an den ersten Eingang eines Motorreglers $10_1$ in Form eines Sollwert/Istwert-Vergleichers für die Vorschubgeschwindigkeit angeschlossen ist, der mit seinem Analogausgang einen Vorschubmotor $11_1$ beaufschlagt, der mittels einer Spindel 12 die Verschiebung des Schlittens 2 in X-Richtung bewirkt. Mit dem Vorschubmotor $11_1$ sind einmal ein Tachogenerator $13_1$, dessen Ausgang mit dem zweiten Eingang des Motorreglers $10_1$ verbunden ist, und zum anderen über die Spindel 12 ein Positionsmeßgerät $14_1$ gekoppelt, dessen Ausgangssignale als Istwerte des Werkstücks 3 dem ersten Eingang des Sollwert/Istwert-Vergleichers $9_1$ zugeführt werden, dessem zweiten Eingang die von den Interpolationseinrichtungen laufend errechneten Sollwerte des Werkstücks 3 zugeleitet werden.

Zur Positionierung des Werkzeugs 7 in Y-Richtung durch Verschiebung des Spindelkopfes 6 mittels einer Spindel 15 ist ein gleichartiger zweiter geschlossener Lageregelkreis mit den gleichen Bezugszeichen—jedoch mit einem unteren Index 2—vorgesehen.

Die numerische Bahnsteuerung 8 weist einen Rechner 16 auf, der mit den zweiten Eingängen der Sollwert/Istwert-Vergleicher $9_1$, $9_2$, mit einem Speicher 17 und einer Eingabeeinheit 18 verbunden ist. Die Eingabeeinheit 18 besitzt (schematisch dargestellt) ein Tastenfeld 19 zur Eingabe der Sollwerte für die vorgegebenen Konturen, ein Tastenfeld 20 zur Steuerung des Programmablaufs und ein Anzeigefeld 21 zur Anzeige der Istwerte von Werkstück 2 und Werkzeug 7 in der X-, Y- und Z-Richtung (Die Ausgangssignale der

Positionsmeßgeräte $14_1$, $14_2$ werden ebenfalls dem Rechner 16 zugeführt).

Mit dem Rechner 16 ist eine Einrichtung 22 verbunden, die einen auf dem Tastenfeld 19 eingebbaren Rundungsradius R für einen Rundungskreis RK in Rundungskreisparameter umwandelt, die von einer im Rechner 16 integrierten Einrichtung zur Kreisinterpolation zur punktweisen Berechnung des Rundungskreises RK benötigt werden. Diese Umwandlung erfolgt auf Veranlassung eines Rundungssignals $S_R$, das durch Betätigung einer Rundungstaste 23 im Tastenfeld 20 unter Zwischenspeicherung im Speicher 17 der Einrichtung 22 zugeleitet wird. Diese Einrichtung 22 wird vorzugsweise durch einen Mikrocomputer hoher Arbeitsgeschwindigkeit gebildet.

Des weiteren sind im Rechner 16 eine Einrichtung zur Geradeninterpolation sowie eine Einrichtung zur Werkzeugradiuskompensation vorgesehen. Zu der aufgrund der eingegebenen Sollwerte ermittelten Kontur K wird unter Berücksichtigung des Werkzeugradius eine korrigierte Kontur K' berechnet und von der Steuerung 8 an die Lageregelkreise für die X- und Y-Richtung und an den nicht dargestellten Lageregelkreis für die Z-Richtung ausgegeben, um den Mittelpunkt M des Werkzeugs 7 längs dieser korrigierten, zur vorgegebenen Kontur K äquidistanten Kontur K' zu bewegen.

Die Erfindung sei anhand der Figure 3 näher erläutert. Bei einem Werkstück 2 soll eine vorgegebene Kontur K gefräst werden, die sich aus zwei sich schneidenden Geraden $G_2$ und $G_3$ zusammensetzt. Die Ecke im Schnittpunkt $P_2$ soll mit einem Rundungskreis $RK_2$ mit dem Rundungsradius $R_2$ abgerundet werden. Zu Beginn des Bearbeitungsvorgangs befinde sich der Mittelpunt M des Werkzeugs 7 in einem vorgegebenen Punkt $P_0$ ($x_0$, $y_0$). Durch die Eingabe auf der Eingabeeinheit 18 "Gerade zum Punkt $P_1$ ($x_1$, $y_1$) mit im Punkt $P_1$ beginnender Werkzeugradiuskorrektur, Rundung mit Rundungsradius $R_1$ und Gerade zum Punkt $P_2$ ($x_2$, $y_2$)" werden von der Einrichtung 22 der Anfangspunkt $P_0'$ ($x_0'$, $y_0'$) und der Endpunkt A ($x_A$, $y_A$) sowie der Mittelpunkt $M_1$ des Rundungskreises $RK_1$ berechnet und der Einrichtung zur Kreisinterpolation zur Berechnung des Rundungskreises $RK_1$ zugeleitet.

Durch die Eingabe "Gerade zum Punkt $P_2$ ($x_2$, $y_2$) mit fortgesetzter Werkzeugradiuskorrektur, Runddung mit Rundungsradius $R_2$ und Gerade zum Punkt $P_3$ ($x_3$, $y_3$)" werden von der Einrichtung 22 der Anfangspunkt $P_2'$ ($x_2'$, $y_2'$) und der Endpunkt $P_2''$ ($x_2''$, $y_2''$) sowie der Mittelpunkt $M_2$ des Rundungskreises $RK_2$ sowie unter Berücksichtigung der Werkzeugradiuskorrektur die entsprechenden Punkte $P_2'''$ ($x_2'''$, $y_2'''$) und $P_2''''$ ($x_2''''$, $y_2''''$) berechnet und der Einrichtung zur Kreisinterpolation zur Berechnung des korrigierten Rundungskreises RK' zugeleitet.

Durch die Eingabe "Gerade zum Punkt $P_3$ ($x_3$, $y_3$) mit Werkzeugradiuskorrektur, Rundung mit Rundungsradius $R_3$ und Gerade zum Punkt $P_4$ ($x_4$, $y_4$) ohne Werkzeugradiuskorrektur" werden von der Einrichtung 22 der Anfangspunkt E ($x_E$, $y_E$)

und der Endpunkt $P_4'$ ($x_4'$, $y_4'$) sowie der Mittelpunkt $M_3$ des Rundungskreises $RK_3$ berechnet und der Einrichtung zur Kreisinterpolation zur Berechnung des Rundungskreises $RK_3$ zugeleitet.

Der Mittelpunkt M des Werkzeugs 7 kann vom Punkt $P_0$ bis zum Punk $P_4$ mit konstanter Bahngeschwindigkeit bewegt werden, da die Rundungskreise $RK_1$, RK' und $RK_3$ tangential in die angrenzenden Geraden $T_1$, K' und $T_4$ übergehen. Die vorgegebene Kontur K kann sich beliebig aus Geraden und/oder Kreisbögen zusammensetzen. Sollen nachfolgende Rundungskreise zwischen Geraden und/oder Kreisbögen den gleichen Rundungsradius aufweisen, so wird dieser zweckmäßigerweise im Speicher 17 abgespeichert.

## Patentanspruch

Numerische Bahnsteuerung für eine Werkzeugmaschine (1) zur Steuerung der Bewegung eines Werkzeugs (7) mit Werkzeugradiuskompensation längs einer zu einer vorgegebenen Kontur (K) aus beispielsweise Geraden ($G_2$, $G_3$) und/oder Kreisbögen um den Werkzeugradius korrigierten Kontur (K'), mit einer Eingabeeinheit (18) und einem Speicher (17) für die die vorgegebene Kontur (K) definierenden Sollwerte sowie mit einem Einrichtungen zur Kreisinterpolation und Geradeninterpolation enthaltenen Rechner (16) und Antriebseinrichtungen ($11_1$, $11_2$) zur Bewegung des Werkzeugs (7) und/oder des Werkstücks (3) sowie mit einer Einrichtung (22) zur Umwandlung eines eingegebenen Rundungskreisradius ($R_1$, $R_3$) für einen Rundungskreis ($RK_1$, $RK_3$) in die von der Einrichtung zur Kreisinterpolation benötigten Rundungskreisparameter zur Berechnung der Bahnkoordinaten des Rundungskreises ($RK_1$, $RK_3$) zur Verbindung von Teilstücken der Bahn, dadurch gekennzeichnet, daß die Eingabeeinheit (18) Mittel zur Erzeugung eines Rundungs befehls ($S_R$) aufweist der die Berechnung der Rundungskreisparameter in der Einrichtung (22) aus löst, und daß der Rechner (16) zur Steuerung der Bewegungsbahn des Werkzeugs (7) so ausgebildet ist, daß durch die von ihm abgegebenen Steuersignale für die Antriebseinrichtung ($11_1$, $11_2$) das Werkzeug (7) von einem außerhalb der vorgegebenen Kontur (K) liegenden vorgegebenen Punkt ($P_0$) auf einer Tangente ($T_1$) in einen berechneten tangential in die Korrigierte Kontur übergehenden Rundungskreis ($RK_1$) und sodann in die korrigierte Kontur (K') an derem Anfangspunkt (A) einfährt und daß das Werkzeug (7) tangential am Endpunkt (E) der korrigierten Kontur (K') in einem weiteren berechneten Rundungskreis ($RK_3$) und sodann auf einer Tangente ($T_4$) zu einem außerhalb der vorgegebenen Kontur (K) liegenden Punkt ($P_4$) ausfährt.

## Revendication

Commande numérique de trajectoire pour une machine-outil (1), destinée à la commande du déplacement d'un outil (7) avec correction du rayon de l'outil suivant un profil (K') corrigé de la valeur du rayon de l'outil par rapport à un profil prédéterminé (K) qui est composé par exemple de droites (G$_2$, G$_3$) et/ou d'arcs de cercle, ladite commande comprenant une unité d'entrée (18) et une mémoire (17) pour les valeurs de consigne définissant le profil prédéterminé (K), ainsi qu'un calculateur (16) doté de dispositifs pour interpolation linéaire et pour interpolation circulaire, des unités d'entraînement (11$_1$, 11$_2$) pour le déplacement de l'outil (7) et/ou de la pièce à usiner (3), et un dispositif (22) pour la conversion d'un rayon de cercle d'arrondi de raccordement (R$_1$, R$_3$) introduit pour un cercle d'arrondi de raccordement (RK$_1$, RK$_3$) en paramètres de cercle d'arrondi de raccordement dont le dispositif d'interpolation circulaire a besoin pour le calcul des coordonnées du cercle d'arrondi de raccordement (RK$_1$, RK$_3$) pour relier des portions de la trajectoire caractérisée en ce que l'unité d'entrée (18) comprend des moyens pour générer une instruction d'arrondi de raccordement (S$_R$) qui déclenche dans le dispositif (22) le calcul des paramètre de cercle d'arrondi de raccordement, et en ce que le calculateur (16) destiné à commander la trajectoire de mouvement de l'outil (7) est réalisé de tellé façon que par les signaux de commande qu'il délivre à l'unité d'entraînement (11$_1$, 11$_2$), l'outil (7) s'engage, à partir d'un point prédéterminé (P$_0$) situé en dehors du profil prédéterminé (K), suivant une tangente (T$_1$) sur un cerlce d'arrondi de raccordement (RK$_1$) qui est calculé et se raccorde tangentiellement au profil corrigé, et ensuite sur le profil corrigé (K') au point de départ (A) de cer dernier, et que l'outil (7) se dégage tangentiellement au point d'arrivée (E) du profil corrigé (K') sur un autre cercle d'arrondi de raccordement (RK$_3$) calculé, et ensuite suivant une tangente (T$_4$) jusqu'à un point (P$_4$) situé en dehors du profil prédéterminé (K).

**Claim**

Numeric path control for a machine tool (1) for controlling the movement of a tool (7) with tool radius compensation along a contour (K') corrected by the tool radius with respect to a predetermined contour (K) of, for example, straight lines (G$_2$, G$_3$) and/or circular arcs, comprising an input unit (18) and a memory (17) for the set points defining the predetermined contour (K), and a computer (16) containing devices for circular interpolation and linear interpolation and drive devices (11$_1$, 11$_2$) for moving the tool (7) and/or the workpiece (3), and a device (22) for converting an input curvature-circle radius (R$_1$, R$_3$) for a curvature circle (RK$_1$, RK$_3$) into the curvature-circle parameters, needed by the device for circular interpolation, for calculating the path coordinates of the curvature circle (RK$_1$, RK$_3$) for linking part-sections of the path, characterized in that the input unit (18) has means for generating a curvature command (S$_R$) which starts the calculation of the curvature-circle parameters in the device (22) and that the computer (16) for controlling the path of movement of the tool (7) is constructed in such a manner that, due to the control signals, emitted by it, for the drive device (11$_1$, 11$_2$), the tool (7) moves from a predetermined point (P$_0$) on a tangent (T$_1$), located outside the predetermined contour (K), into a calculated curvature circle (RK$_1$) which tangentially passes into the corrected contour, and then into the corrected contour (K') at its starting point (A), and that, at the end point (E) of the corrected contour (K'), the tool (7) moves tangentially into another calculated curvature circle (RK$_3$) and then out to a point (P$_4$) located outside the predetermined contour (K) on a tangent (T$_4$).

FIG.1

FIG.3

# FIG. 2